# EUROPEAN PATENT APPLICATION

(11) **EP 2 395 210 A1**
(43) Date of publication of application: **14.12.2011**
(21) Application number: 09839678.1
(22) Date of filing: 06.02.2009
(51) Int. Cl.: F01N 3/08, F01N 3/20

(54) **EXHAUST CLEANING DEVICE FOR INTERNAL COMBUSTION ENGINE**

(71) Applicant: Toyota Jidosha Kabushiki Kaisha, Toyota-shi, Aichi 471-8571 (JP)
(72) Inventor: KATOH, Kenji, Toyota-shi Aichi 471-8571 (JP); MASUDA, Kei, Toyota-shi Aichi 471-8571 (JP)
(74) Representative: Kuhnen & Wacker
(86) International application number: PCT/JP2009/052448
(87) International publication number: WO 2010/089901

(57) **Abstract**

In an exhaust purification device of an internal combustion engine, a pair of upstream side NOₓ storage catalysts 15a 15b storing NOₓ contained in the exhaust gas when the air-fuel ratio of the inflowing exhaust gas is lean and releasing the stored NOₓ when the air-fuel ratio of the inflowing exhaust gas becomes the stoichiometric air-fuel ratio or rich are arranged inside an engine exhaust passage. At the downstream side of the upstream side NOₓ storage catalysts 15a 15b, a downstream side NOₓ storage catalyst 17 is arranged. The upstream side NOₓ storage catalysts 15a 15b and downstream side NOₓ storage catalyst 17 are formed so that the spatial velocity in the downstream side NOₓ storage catalyst 17 becomes larger than the spatial velocities in the upstream side storage catalysts 15a 15b.

## Description

### BACKGROUND OF THE INVENTION

### 1. Field of the Invention

The present invention relates to an exhaust purification device of an internal combustion engine.

### 2. Description of the Related Art

Known in the art is an internal combustion engine in the engine exhaust passage of which a plurality of NOₓ storage catalysts are arranged which store NOₓ contained in the exhaust gas when the air-fuel ratio of the inflowing exhaust gas is lean and release the stored NOₓ when the air-fuel ratio of the inflowing exhaust gas becomes the stoichiometric air-fuel ratio or rich. In this internal combustion engine, the NOₓ generated when the fuel is burned under a lean air-fuel ratio is stored in at least one NOₓ storage catalyst. On the other hand, if the NOₓ storage ability of at least one NOₓ storage catalyst approaches saturation, the air-fuel ratio of the exhaust gas is temporarily made rich whereby NOₓ is released from the NOₓ storage catalyst and reduced.

As this internal combustion engine using such a plurality of NOₓ storage catalysts, there is known an internal combustion engine arranging a pair of NOₓ storage catalysts in parallel in the engine exhaust passage, using at least one NOₓ storage catalyst to store the NOₓ in the exhaust gas, and releasing the NOₓ from the other NOₓ storage catalyst at this time (see Japanese Patent Publication (A) No. 2007-127020).

In this way, in the past, to improve the NOₓ purification rate, internal combustion engines using a plurality of NOₓ storage catalysts are known. None of these internal combustion engines could give a sufficient NOₓ purification rate however. This is because the NOₓ purification mechanism had not been sufficiently clarified.

However, after long research, the inventors finally clarified the NOₓ purification mechanism. This NOₓ purification mechanism will be explained later, but the clarification of this NOₓ purification mechanism enables the NOₓ purification performance by a NOₓ storage catalyst to be remarkably improved.

### SUMMARY OF THE INVENTION

An object of the present invention is to provide an exhaust purification device of an internal combustion engine in which the NOₓ purification performance is remarkably improved.

According to the present invention, there is provided an exhaust purification device of an internal combustion engine arranging, inside an engine exhaust passage, an NOₓ storage catalyst storing NOₓ contained in exhaust gas when an air-fuel ratio of an inflowing exhaust gas is lean and releasing stored NOₓ when they air-fuel ratio of the exhaust gas becomes the stoichiometric air-fuel ratio or rich, wherein the NOₓ storage catalyst is comprised of an upstream side NOₓ storage catalyst and a downstream side NOₓ storage catalyst arranged at a downstream side from a downstream end of the upstream side NOₓ storage catalyst across an exhaust passage space and wherein the upstream side NOₓ storage catalyst and the downstream side NOₓ storage catalyst are formed so that a spatial velocity in the downstream side NOₓ storage catalyst becomes larger than a spatial velocity in the upstream side storage catalyst.

### BRIEF DESCRIPTION OF THE DRAWINGS

These and other objects and features of the present invention will become clearer from the following description of the preferred embodiments given with reference to the attached drawings, wherein:
FIG. 1 is an overview of a compression ignition type internal combustion engine,
FIG. 2 is a side cross-sectional view of an NOₓ storage catalyst,
FIGS. 3A and 3B are cross-sectional views of a surface part of the catalyst carrier of an NOₓ storage catalyst,
FIGS. 4A to 4D are views showing various arrangements of an NOₓ storage catalyst,
FIG. 5 is a view showing changes in the exhaust NOₓ concentration exhausted from an NOₓ storage catalyst,
FIG. 6 is a view showing relationships of an NOₓ stored amount and a catalyst bed temperature,
FIG. 7 is a time chart of NOₓ and SOₓ release control,
FIGS. 8 is a view showing a map of stored NOₓ amount NOXA, etc. and
FIG. 9 is a flowchart of execution of processing on an NOₓ storage catalyst.

### DESCRIPTION OF THE PREFERRED EMBODIMENTS

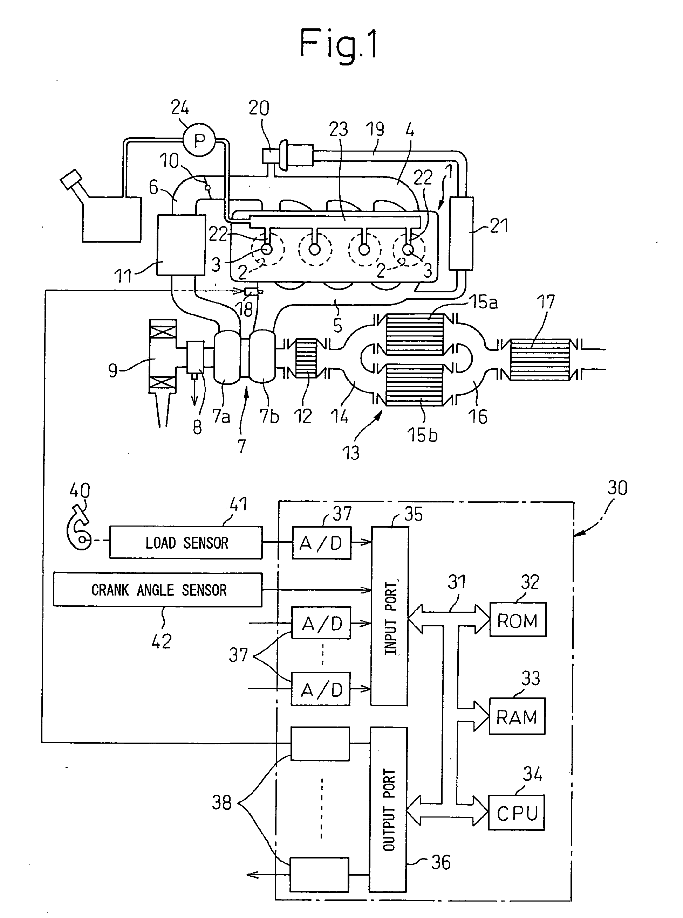

FIG. 1 is an overview of a compression ignition type internal combustion engine.

Referring to FIG. 1, 1 indicates an engine body, 2 a combustion chamber of a cylinder, 3 an electronically controlled fuel injector for injecting fuel into each combustion chamber 2, 4 an intake manifold, and 5 an exhaust manifold. The intake manifold 4 is connected through an intake duct 6 to the outlet of a compressor 7a of an exhaust turbocharger 7. The inlet of the compressor 7a is connected through an intake air detector 8 to an air cleaner 9. Inside the intake duct 6, a throttle valve 10 driven by a step motor is arranged. Furthermore, around the intake duct 6, a cooling device 11 for cooling the intake air flowing through the inside of the intake duct 6 is arranged. In the embodiment shown in FIG. 1, the engine cooling water is guided to the inside of the cooling device 11 where the engine cooling water is used to cool the intake air.

On the other hand, the exhaust manifold 5 is connected to the inlet of an exhaust turbine 7b of the exhaust turbocharger 7, while the outlet of the exhaust turbine 7b is connected through a catalyst 12 having an oxidation function to an NOₓ treatment system 13 comprised of a plurality of NOₓ storage catalysts. In the embodiment shown in FIG. 1, this NOₓ treatment system 13 is comprised of an exhaust branch pipe 14 connected to the outlet of the catalyst 12 and branching the exhaust gas flow into a pair of exhaust gas flows, a pair of upstream side NOₓ storage catalysts 15a, 15b connected to the outlets of the exhaust branch pipe 14 and arranged in parallel, an exhaust header pipe 16 connected to the outlets of the upstream side NOₓ storage catalysts 15a, 15b and combining the exhaust gas discharged from the upstream side NOₓ storage catalysts 15a, 15b to a single exhaust gas flow, and a downstream side NOₓ storage catalyst 17 connected to the outlet of the exhaust header pipe 16. As shown in FIG. 1, in the exhaust manifold 5, a reducing agent feed valve 18 is arranged for feeding a reducing agent, for example, fuel, to the inside of the exhaust manifold.

The exhaust manifold 5 and the intake manifold 4 are connected with each other through an exhaust gas recirculation (below, "EGR") passage 19. Inside the EGR passage 19, an electronically controlled EGR control valve 20 is arranged. Further, around the EGR passage 19, a cooling device 21 is arranged for cooling the EGR gas flowing through the inside of the EGR passage 19. In the embodiment shown in FIG. 1, the engine cooling water is guided to the inside of the cooling device 21 where the engine cooling water is used to cool the EGR gas. On the other hand, each fuel injector 3 is connected through each fuel feed pipe 22 to a common rail 23. Fuel is fed to this common rail 23 from an electronically controlled variable discharge fuel pump 24. The fuel fed to the inside of the common rail 23 is fed through each fuel feed pipe 22 to each fuel injector 3.

An electronic control unit 30 is comprised of a digital computer provided with a ROM (read only memory) 32, RAM (random access memory) 33, CPU (microprocessor) 34, input port 35, and output port 36, which are connected to each other by a bidirectional bus 31. An output signal of the intake air detector 8 is input through a corresponding AD converter 37 to the input port 35. Further, an accelerator pedal 40 is connected to a load sensor 41 generating an output voltage proportional to an amount of depression L of an accelerator pedal 40. An output voltage of the load sensor 41 is input through a corresponding AD converter 37 to the input port 35. Furthermore, to the input port 35, a crank angle sensor 42 generating an output pulse every time the crankshaft rotates by for example 15° is connected. On the other hand, the output port 36 is connected through a corresponding drive circuit 38 to a fuel injector 3, a step motor for driving the throttle valve 10, a reducing agent feed valve 18, an EGR control valve 20, and a fuel pump 24.

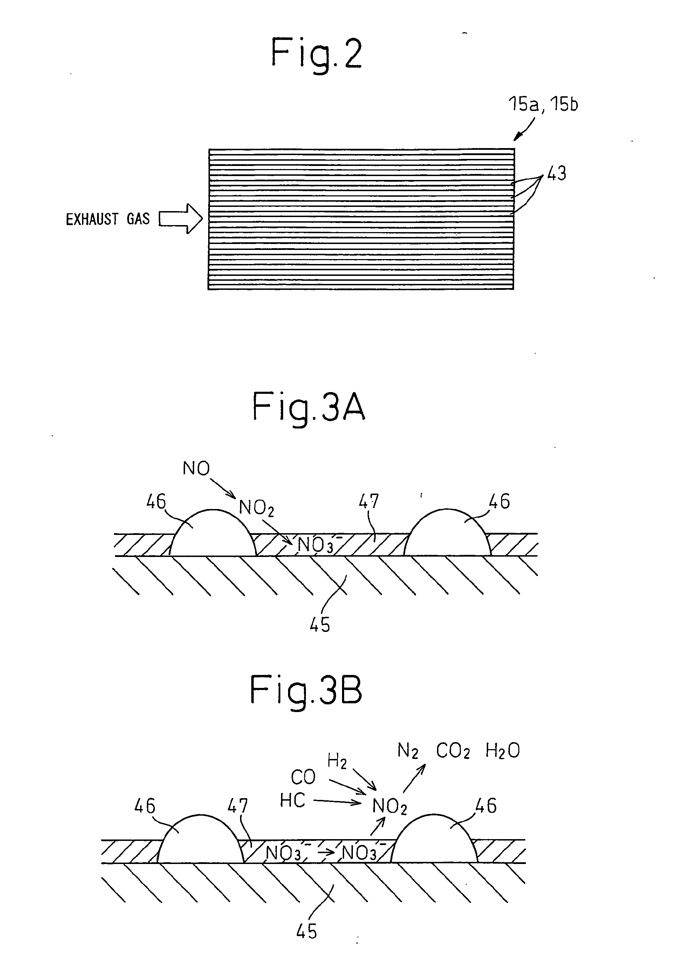

FIG. 2 is a side cross-sectional view of upstream side NOₓ storage catalysts 15a, 15b. As shown in FIG. 2, the upstream side NOₓ storage catalysts 15a, 15b have substrates in which large numbers of exhaust gas passage holes extending in the flow direction of the exhaust gas, that is, cells 43, are formed. Note that, the downstream side NOₓ storage catalyst 17 also has a cross-sectional shape similar to the cross-sectional shape shown in FIG. 2.

These NOₓ storage catalysts 15a, 15b, and 17 are comprised of cores 43 on the surfaces of which catalyst carriers comprised of for example alumina are carried. FIGS. 3A, 3B illustrate cross-sections of the surface part of a catalyst carrier 45. As shown in FIGS. 3A and 3B, a precious metal catalyst 46 is carried dispersed on the surface of the catalyst carrier 45. Furthermore, a layer of an NOₓ absorbent 47 is formed on the surface of the catalyst carrier 45.

In the embodiment according to the present invention, platinum Pt is used as the precious metal catalyst 46. As the ingredient forming the NOₓ absorbent 47, for example, at least one selected from potassium K, sodium Na, cesium Cs, or another such alkali metal, barium Ba, calcium Ca, or another such alkali earth, or lanthanum La, yttrium Y, or another such rare earth is used.

If the ratio of the air and fuel (hydrocarbons) fed to the engine intake passage, combustion chambers 2, and exhaust passage upstream of the NOₓ storage catalysts 15a, 15b, and 17 is referred to as "the air-fuel ratio of the exhaust gas", the NOₓ absorbent 47 absorbs the NOₓ when the air-fuel ratio of the exhaust gas is lean and releases the absorbed NOₓ when the oxygen concentration in the exhaust gas falls for an NOₓ absorption/release action.

That is, if explaining the case of using barium Ba as the ingredient forming the NOₓ absorbent 47 as an example, when the air-fuel ratio of the exhaust gas is lean, that is, when the oxygen concentration in the exhaust gas is high, the NO contained in the exhaust gas, as shown in FIG. 3A, is oxidized on the platinum Pt46 and becomes NO₂. Next, it is absorbed in the NOₓ absorbent 47 and bonds with the barium carbonate BaCO₃ while diffusing in the NOₓ absorbent 47 in the form of nitrate ions NO₃⁻. In this way, NOₓ is absorbed in the NOₓ absorbent 47. So long as the oxygen concentration in the exhaust gas is high, NO₂ is formed on the surface of the platinum Pt46. So long as the NOₓ absorption ability of the NOₓ absorbent 47 is not satisfied, the NO₂ is absorbed in the NOₓ absorbent 47 whereby nitrate ions NO₃⁻ are generated. Further, at this time, part of the NO contained in the exhaust gas is adsorbed in the NOₓ storage catalyst in the form of NO or NO₂.

As opposed to this, by feeding a reducing agent from the reducing agent feed valve 18 or by making the air-fuel ratio in the combustion chamber 2 rich or the stoichiometric air-fuel ratio so as to make the air-fuel ratio of the exhaust gas rich or the stoichiometric air-fuel ratio, the oxygen concentration in the exhaust gas falls, so the reaction proceeds in the opposite direction (NO₃⁻→NO₂) and therefore the nitrate ions NO₃⁻ in the NOₓ absorbent 47 are discharged from the NOₓ absorbent 47 in the form of NO₂. At this time, the simultaneously adsorbed NOₓ is also released. Next, the released NOₓ is reduced by the unburned HC and CO contained in the exhaust gas.

In this way, when burning the fuel when the air-fuel ratio of the exhaust gas is lean, that is, under a lean air-fuel ratio, the NOₓ in the exhaust gas is absorbed in or adsorbed at the NOₓ absorbent 47. That is, the NOₓ in the exhaust gas is stored in the NOₓ storage catalyst. However, if continuing to burn fuel under a lean air-fuel ratio, eventually the NOₓ absorption ability of the NOₓ absorbent 47 ends up becoming saturated and therefore NOₓ ends up no longer being able to be absorbed by the NOₓ absorbent 47. Therefore, in this embodiment of the present invention, before the absorption ability of the NOₓ absorbent 47 becomes saturated, the reducing agent is fed from the reducing agent feed valve 18 or the air-fuel ratio in the combustion chamber 2 is made rich so as to make the air-fuel ratio of the exhaust gas temporarily rich and thereby make the NOₓ absorbent 47 release the NOₓ.

In this regard, the exhaust gas contains SOₓ, that is, SO₂. When this SO₂ flows into the NOₓ storage catalysts 15a, 15b, and 17, this SO₂ is oxidized in the platinum Pt46 and becomes SO₃. Next, this SO₃ is absorbed in the NOₓ absorbent 47, bonds with barium carbonate BaCO₃, diffuses in the NOₓ absorbent 47 in the form of sulfate ions SO₄²⁻, and generates stable sulfate BaSO_{4.} However, the NOₓ absorbent 47 has a strong basicity, so this sulfate BaSO₄ is stable and hard to break down. By just making the air-fuel ratio of the exhaust gas rich, the sulfate BaSO₄ remains without being broken down. Therefore, inside the NOₓ absorbent 47, along with the elapse of time, the sulfate BaSO₄ increases. Therefore, along with the elapse of time, the amount of NOₓ which the NOₓ absorbent 47 can absorb falls.

In this regard, in this case, if raising the temperature of the NOₓ storage catalysts 15a, 15b, and 17 to the 600°C or higher SOₓ release temperature and in that state making the air-fuel ratio of the exhaust gas flowing into the NOₓ storage catalysts 15a, 15b, and 17 rich, SOₓ is released from the NOₓ absorbent 47 a little by a little. Therefore, in this embodiment according to the present invention, when the amount of SOₓ stored in the NOₓ storage catalysts 15a, 15b, and 17 exceeds the allowable value, the temperature of the NOₓ storage catalysts 15a, 15b, and 17 is raised to the 600°C or higher SOₓ release temperature and in that state the air-fuel ratio of the exhaust gas flowing into the NOₓ storage catalysts 15a, 15b, and 17 is made rich to thereby make the NOₓ storage catalysts 15a, 15b, and 17 release the SOₓ.

Now then, to improve the NOₓ purification performance by the NOₓ treatment system 13, it is necessary to reduce the amount of NOₓ passing straight through the NOₓ treatment system 13. For this reason, it is necessary to raise the storage rate of NOₓ stored in the NOₓ storage catalyst in the NOₓ treatment system 13. The inventors researched this point repeatedly and as a result found that storage of NOₓ takes time and that in this case, in particular, the oxidation action from NO to NO₂ determines the speed of the storage time of the NOₓ and therefore promotion of the oxidation action from NO to NO₂ is most important for improvement of the NOₓ purification performance.

In this case, to promote the oxidation action from NO to NO₂, it is necessary to lengthen the residence time of the exhaust gas in the NOₓ storage catalyst. Therefore, it is necessary to slow the flow rate of the exhaust gas flowing through the NOₓ storage catalyst, that is, the spatial velocity (per unit time exhaust gas volume flow/NOₓ storage/catalyst volume) in the NOₓ storage catalyst.

If slowing the spatial velocity in the NOₓ storage catalyst in this way, the oxidation action from NO to NO₂ is promoted and therefore the NOₓ purification performance by this NOₓ storage catalyst can be improved. However, no matter how much the NOₓ purification performance is improved, it is not possible to make the amount of NOₓ passing straight through the NOₓ storage catalyst zero. Therefore, it becomes essential to arrange another NOₓ storage catalyst downstream of the NOₓ storage catalyst, that is, a downstream side NOₓ storage catalyst.

In this regard, to improve the NOₓ purification performance even with this downstream side NOₓ storage catalyst, it is necessary to promote the oxidation action from the NO to the NO₂ In this regard, the majority of the NOₓ contained in the exhaust gas is stored in the upstream side NOₓ storage catalyst, so the NOₓ concentration in the exhaust gas flowing into the downstream side NOₓ storage catalyst becomes considerably lower than the NOₓ concentration in the exhaust gas flowing into the upstream side NOₓ storage catalyst. However, when, in this way, the NOₓ concentration in the exhaust gas is low, to improve the NOₓ purification performance, it is meaningless to slow the spatial velocity like in the upstream side NOₓ storage catalyst. It is learned that it is necessary to conversely speed up the spatial velocity.

That is, when there is a large amount of NOₓ in the inflowing exhaust gas like in the upstream side NOₓ storage catalyst, the amount of NOₓ contacting the precious metal catalyst 46 on the catalyst carrier 45 is large. Therefore, in this case, if slowing the spatial velocity in the upstream side NOₓ storage catalyst, it is possible to increase the NOₓ purification ability.

However, when the amount of NOₓ in the inflowing exhaust gas is small like in the downstream side NOₓ storage catalyst, there is less opportunity for the NOₓ in the exhaust gas to contact the precious metal catalyst 46 on the catalyst carrier 45. Therefore, in this case, to increase the NOₓ purification ability, the most important thing is to increase the opportunities for the NOₓ in the exhaust gas and the precious metal catalyst 46 to contact. To increase the opportunities for the NOₓ in the exhaust gas and the precious metal catalyst 46 to contact, it is necessary to give disturbance to the flow of exhaust gas. An effective method for this is to speed up the flow rate of the exhaust gas. In fact, if speeding up the flow rate of the exhaust gas flowing into the downstream side NOₓ storage catalyst, that is, if speeding up the spatial velocity in the downstream side NOₓ storage catalyst, it is learned that the NOₓ purification rate in the NOₓ treatment system 13 is greatly increased.

Further, if arranging the downstream side NOₓ storage catalyst a distance away from the upstream side NOₓ storage catalyst, that is, if forming an exhaust passage space between the downstream end of the upstream side NOₓ storage catalyst and the downstream side NOₓ storage catalyst, the exhaust gas flowing out from the downstream end of the upstream side NOₓ storage catalyst is powerfully disturbed inside this exhaust passage space. Therefore, if forming such an exhaust passage space, it is possible to cause a powerful disturbance in the exhaust gas flowing into the downstream side NOₓ storage catalyst and therefore possible to improve the NOₓ purification performance in the downstream side NOₓ storage catalyst.

Therefore, in the present invention, the NOₓ storage catalyst arranged in the engine exhaust passage is comprised of an upstream side NOₓ storage catalyst and a downstream side NOₓ storage catalyst arranged at the downstream side from the downstream end of this upstream side NOₓ storage catalyst across the exhaust passage space. The upstream side NOₓ storage catalyst and downstream side NOₓ storage catalyst are formed so that the spatial velocity of the downstream side NOₓ storage catalyst becomes greater than the spatial velocity in the upstream side storage catalyst.

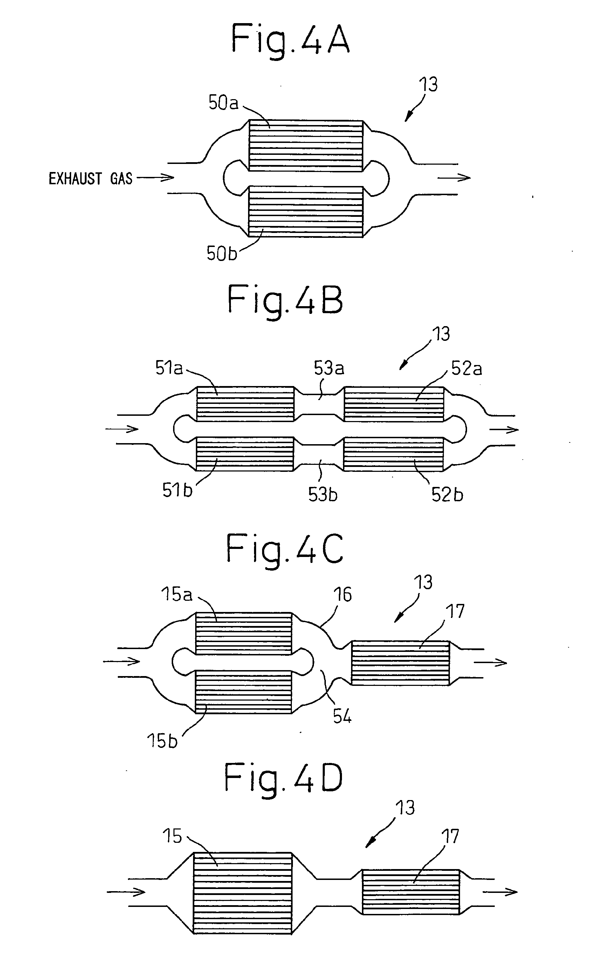

In this way, the present invention is characterized by the provision of an exhaust passage space between the upstream side NOₓ storage catalyst and the downstream side NOₓ storage catalyst and by the spatial velocity in the downstream side NOₓ storage catalyst being made larger than the spatial velocity in the upstream side storage catalyst. FIGS. 4A to 4D, FIG. 5, and FIG. 6 show an experiment for validating these features.

That is, FIGS. 4A to 4D show the case of changing the arrangement of NOₓ storage catalysts in the case of maintaining the same total volume of all NOₓ storage catalysts in the NOₓ treatment system 13. Note that, in these NOₓ treatment systems 13, the NOₓ treatment system 13 shown in FIG. 1 is shown in FIG. 4C.

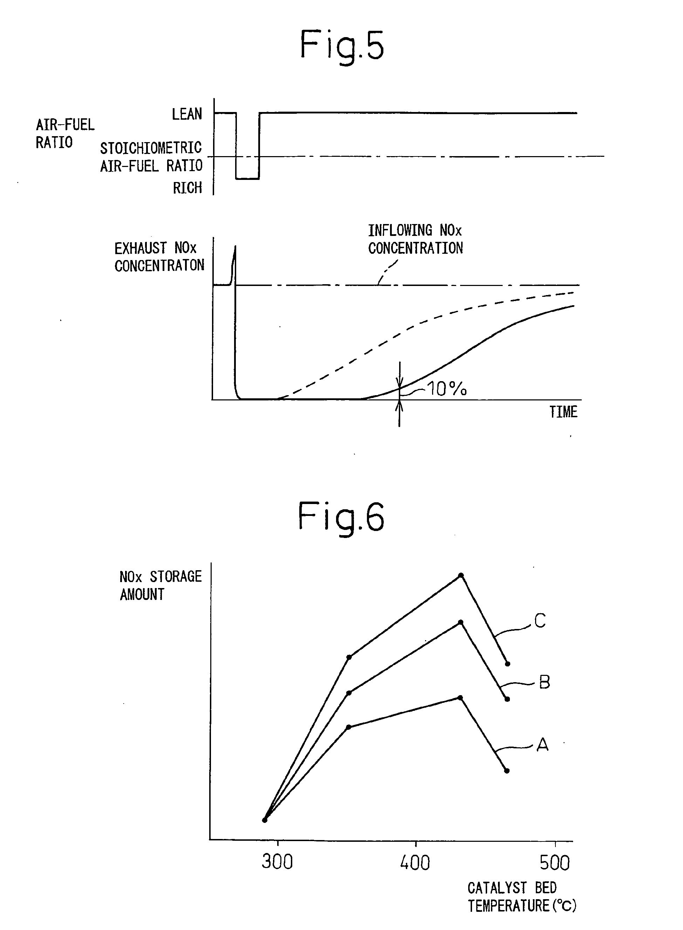

On the other hand, FIG. 5 shows the changes in the exhausted NOₓ concentration in the exhaust gas flowing out from the NOₓ treatment system 13 in the case of changing the air-fuel ratio of the exhaust gas flowing into the NOₓ treatment system 13 from lean temporarily to rich. Note that, FIG. 5 shows the inflowing NOₓ concentration in the exhaust gas flowing into the NOₓ treatment system 13 by a dot and a dash line. As shown in FIG. 5, when the air-fuel ratio of the exhaust gas is made rich, the exhausted NOₓ concentration becomes zero as shown by the solid line. Next, after being maintained at zero for a while, the ratio gradually rises. In this case, when the exhausted NOₓ concentration is zero, all of the NOₓ contained in the exhaust gas is stored in the NOₓ storage catalyst. When all of the NOₓ contained in the exhaust gas can no longer be stored, the exhaust NOₓ concentration starts to rise.

As shown in FIG. 5, up to around when the exhausted NOₓ concentration becomes 10%, it can be considered that almost all of the NOₓ contained in the exhaust gas is stored. Therefore, the amount of NOₓ stored until the exhausted NOₓ concentration becomes 10% represents the NOₓ stored amount which the NOₓ storage catalyst can store. The ordinate in FIG. 6 shows the NOₓ stored amount able to be stored by this NOₓ storage catalyst. Note that, in FIG. 6, the abscissa shows the bed temperature of the NOₓ storage catalyst. In FIG. 6, the NOₓ stored amount being high means that the NOₓ purification performance is high.

Curve A of FIG. 6 shows the NOₓ stored amount when arranging a pair of NOₓ storage catalysts 50a, 50b in parallel as shown in FIG. 4A, curve B of FIG. 6 shows the NOₓ stored amount when providing a pair of upstream side NOₓ storage catalysts 51a, 51b and respectively corresponding downstream side NOₓ storage catalysts 52a, 52b arranged at the downstream sides of the upstream side NOₓ storage catalysts 51a, 51b as shown in FIG. 4B, and curve C of FIG. 6 shows the NOₓ stored amount in the embodiment of the present invention shown in FIG. 4C.

FIG. 4A shows the case where, to slow the spatial velocity in the NOₓ storage catalyst, the NOₓ storage catalyst is comprised of a pair of NOₓ storage catalysts 50a, 50b arranged in parallel. The change in the exhaust NOₓ concentration in this case is shown by the broken line in FIG. 5. As will be understood from FIG. 5, in the case shown in FIG. 4A, the amount of NOₓ exhausted from the NOₓ treatment system 13 becomes larger and, therefore, as shown in curve A of FIG. 6, the NOₓ stored amount becomes smaller. That is, as shown in FIG. 4A, by just arranging a pair of large capacity NOₓ storage catalysts 50a, 50b in parallel, it is not possible to obtain a high NOₓ purification performance.

FIG. 4B shows the case of making the NOₓ discharged from the upstream side NOₓ storage catalysts 51a, 51b be stored at the respectively corresponding downstream side NOₓ storage catalysts 52a, 52b. In this case, between the corresponding upstream side NOₓ storage catalysts 51a, 51b and downstream side NOₓ storage catalysts 52a, 52b, exhaust passage spaces 53a, 53b are formed, so disturbance is generated in the exhaust gas flowing into the downstream side NOₓ storage catalysts 52a, 52b. However, the spatial velocities in the downstream side NOₓ storage catalysts 52a, 52b are not that fast, so the disturbances caused in the exhaust gas flowing to the downstream side NOₓ storage catalysts 52a, 52b do not become that strong. Further, the spatial velocities in the upstream side NOₓ storage catalysts 51a, 51b also are not that slow, so as shown in FIG. 6B, the NOₓ stored amounts do not become that great.

As opposed to this, in the case shown in FIG. 4C, compared with the case shown in FIG. 4B, the volumes of the upstream side NOₓ storage catalysts 15a, 15b are large, so the spatial velocities of the upstream side NOₓ storage catalysts 15a, 15b become slower and therefore the NOₓ stored amounts in the upstream side NOₓ storage catalysts 15a, 15b can be increased. On the other hand, the exhaust gases flowing out from the pair of upstream side NOₓ storage catalysts 15a, 15b flow into a single downstream side NOₓ storage catalyst 17, so the spatial velocity in the downstream side NOₓ storage catalyst 17 becomes about two times faster than the spatial velocities in the upstream side NOₓ storage catalysts 15a, 15b. As a result, a powerful disturbance is given to the flow of exhaust gas flowing into the downstream side NOₓ storage catalyst 17, so the NOₓ stored amount to the downstream side NOₓ storage catalyst 17 is increased.

Further, inside the exhaust header pipe 16 between the pair of upstream side NOₓ storage catalysts 15a, 15b and downstream side NOₓ storage catalyst 17, an exhaust passage space 54 is formed. In this exhaust passage space 54, the exhaust gases flowing out from the upstream side NOₓ storage catalysts 15a, 15b strongly collide. As a result, a powerful disturbance is given to the flow of exhaust gas flowing into the downstream side NOₓ storage catalyst 17. Due to this, the NOₓ stored amount to the downstream side NOₓ storage catalyst 17 can be increased. Therefore, in the case shown in FIG. 4C, as shown in FIG. 6C, the NOₓ stored amount becomes maximum and the highest NOₓ purification performance can be obtained.

In the embodiment of the present invention shown in FIG. 1 or FIG. 4C, the upstream side NOₓ storage catalyst is comprised of a pair of NOₓ storage catalysts 15a, 15b arranged in parallel, while the downstream side NOₓ storage catalyst is comprised of a single NOₓ storage catalyst 17. However, so long as the spatial velocity in the downstream side NOₓ storage catalyst becomes larger than the spatial velocity in the upstream side storage catalyst, it is possible to make the upstream side NOₓ storage catalyst a plurality of NOₓ storage catalysts arranged in parallel and make the downstream side NOₓ storage catalyst a plurality of NOₓ storage catalysts arranged in parallel or a single NOₓ storage catalyst, that is, make it at least one NOₓ storage catalyst.

Further, as shown in FIG. 4D, even if making the upstream side NOₓ storage catalyst 15 and downstream side NOₓ storage catalyst 17 single NOₓ storage catalysts and making the volume and cross-sectional area of the upstream side NOₓ storage catalyst 15 larger than the volume and cross-sectional area of the downstream side NOₓ storage catalyst 17, the spatial velocity in the downstream side NOₓ storage catalyst 17 will become larger than the spatial velocity in the upstream side storage catalyst 15. Therefore, a combination of the upstream side NOₓ storage catalyst 15 and downstream side NOₓ storage catalyst 17 shown in FIG. 4D can also be used.

Therefore, if expressing the example shown in FIG. 4C and the example shown in FIG. 4D comprehensively, in this embodiment of the present invention, the total cross-sectional area of the upstream side NOₓ storage catalysts 15a, 15b, and 15 is made larger than the total cross-sectional area of the downstream side NOₓ storage catalyst 17. Note that, the example shown in FIG. 4D has larger dimensions, so if considering mounting in a vehicle, the example shown in FIG. 4C can be said to be superior.

Now then, in this embodiment of the present invention, the NOₓ storage action is performed mainly by the upstream side NOₓ storage catalysts 15, 15a, and 15b. Therefore, to increase the NOₓ stored amount, it is preferable to raise the NOₓ storage ability by the upstream side NOₓ storage catalysts 15, 15a, and 15b. In this case, NOₓ is stored in the NOₓ storage catalyst, so the NOₓ has to reach the NOₓ absorbent 47. Therefore, to increase the NOₓ storage ability, it is necessary to increase the amount of NOₓ reaching the NOₓ absorbent 47.

In this case, to increase the amount of NOₓ reaching the NOₓ absorbent 47, it is preferable to increase the catalyst surface area. Therefore, in this embodiment of the present invention, the catalyst surface area per unit volume of the upstream side NOₓ storage catalysts 15, 15a, and 15b is made larger than the catalyst surface area per unit volume of the downstream side NOₓ storage catalyst 17. Specifically speaking, in this embodiment of the present invention, the number of cells 43 per unit cross-sectional area of the upstream side NOₓ storage catalysts 15, 15a, 15b is made larger than the number of cells 43 per unit cross-sectional area of the downstream side NOₓ storage catalyst 17.

Next, explaining the NOₓ storage action by the downstream side NOₓ storage catalyst 17, as explained above, it is necessary to increase the spatial velocity at the downstream side NOₓ storage catalyst 17 to increase the NOₓ stored amount to the downstream side NOₓ storage catalyst 17. In this case, to further increase the NOₓ stored amount to the downstream side NOₓ storage catalyst 17, it is preferable to weaken the basicity of the downstream side NOₓ storage catalyst 17. If weakening the basicity of the downstream side NOₓ storage catalyst 17, the oxidation action from NO to NO₂ becomes stronger and therefore the NOₓ stored amount to the downstream side NOₓ storage catalyst 17 is increased. Therefore, in this embodiment of the present invention, the downstream side NOₓ storage catalyst 17 is made weaker in basicity than the upstream side NOₓ storage catalysts 15, 15a, and 15b.

One method of making the basicity of the downstream side NOₓ storage catalyst 17 weaker than the basicity of the upstream side NOₓ storage catalysts 15, 15a, and 15b is the method of reducing the amount of the NOₓ absorbent 47 of the downstream side NOₓ storage catalyst 17. Therefore, in this embodiment of the present invention, the amount of the NOₓ absorbent 47 of the downstream side NOₓ storage catalyst 17 is made smaller than the amount of NOₓ absorbent 47 of the upstream side NOₓ storage catalysts 15, 15a, and 15b. For example, when using potassium K as the NOₓ absorbent 47, the amount of potassium K carried at the downstream side NOₓ storage catalyst 17 is made about 1/3 of the amount of potassium K carried at the upstream side NOₓ storage catalysts 15a, 15b.

On the other hand, in another embodiment making the basicity of the downstream side NOₓ storage catalyst 17 weaker than the basicity of the upstream side NOₓ storage catalysts 15, 15a, and 15b, as the NOₓ absorbent 47 of the downstream side NOₓ storage catalyst 17, an ingredient with a weaker basicity than even the NOₓ absorbent 47 of the upstream side NOₓ storage catalysts 15, 15a, and 15b is used. For example, as the NOₓ absorbent 47 of the upstream side NOₓ storage catalysts 15, 15a, and 15b, potassium K, sodium Na, or other alkali metal is used, while as the NOₓ absorbent 47 of the downstream side NOₓ storage catalyst 17, barium Ba or another alkali earth metal is used.

In this regard, when making the air-fuel ratio of the exhaust gas rich and making the upstream side NOₓ storage catalysts 15, 15a, and 15b release NOₓ, this released NOₓ is never re-stored in the downstream side NOₓ storage catalyst 17. However, when making the upstream side NOₓ storage catalysts 15, 15a, and 15b release SOₓ, it is known that the released SOₓ moves to the downstream side with repeated readsorption and redesorption. In this case, as in the present invention, if the spatial velocity in the downstream side NOₓ storage catalyst 17 becomes faster, the SOₓ released from the upstream side NOₓ storage catalysts 15, 15a, and 15b passes through the downstream side NOₓ storage catalyst 17 relatively fast. Therefore, it is possible to desorb the SOₓ in a short time.

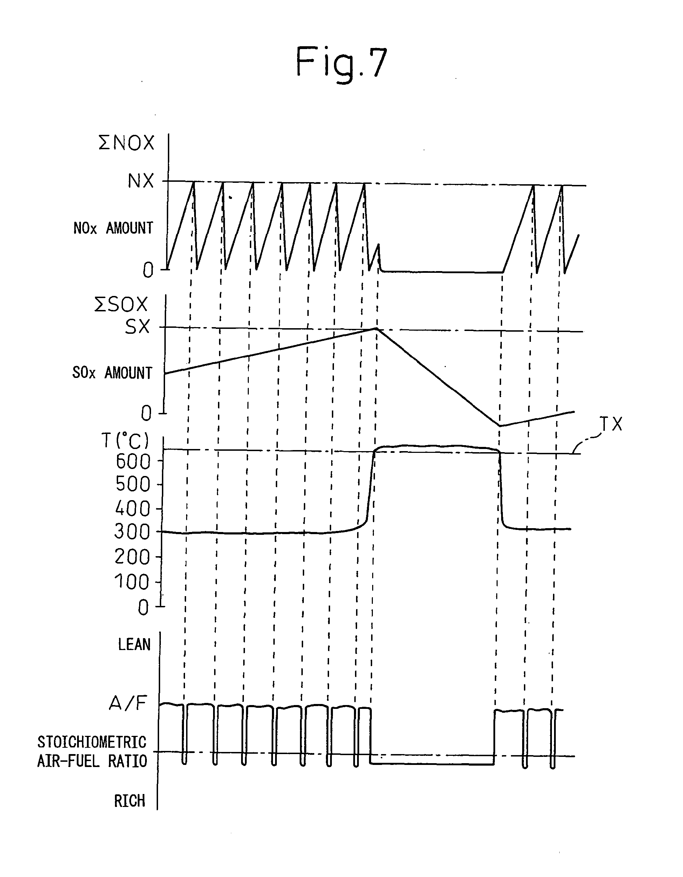

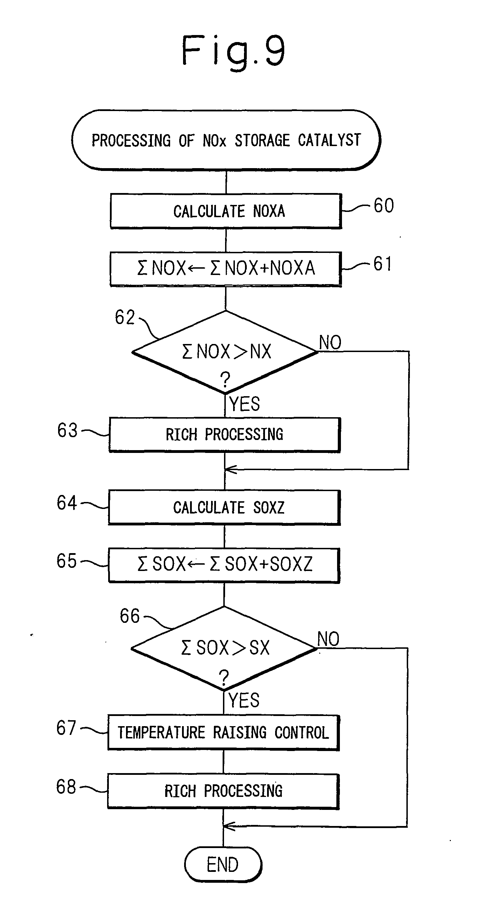

Next, referring to FIG. 7 FIG. 9, the processing performed on the NOₓ storage catalysts 15, 15a, 15b, and 17 will be explained.

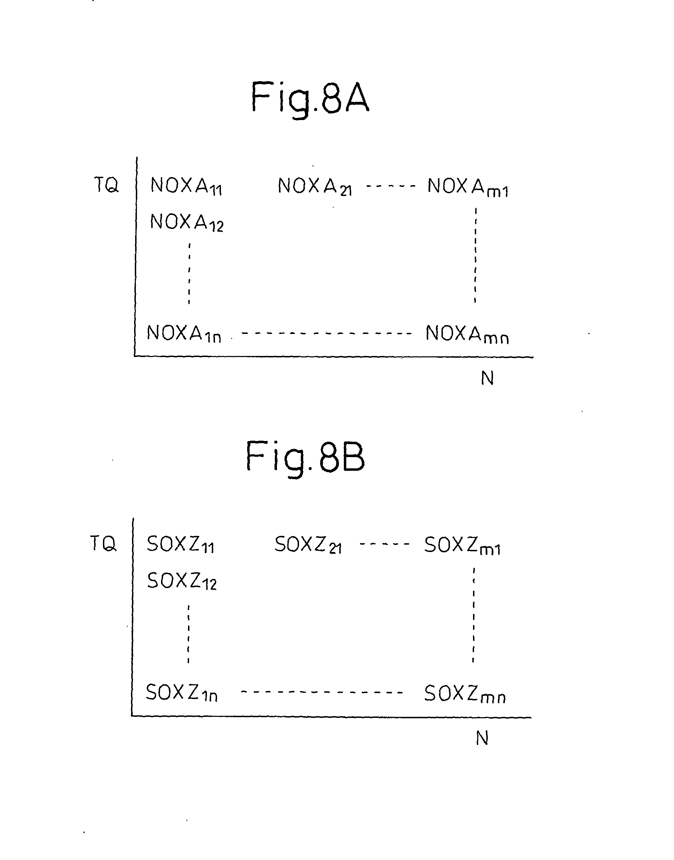

In this embodiment according to the present invention, the NOₓ amount NOXA exhausted from the engine per unit time is stored as a function of the required torque TQ and engine speed N in the form of the map shown in FIG. 8A in advance in the ROM 32. By cumulatively adding this NOₓ amount NOXA, the total NOₓ amount ΣNOX stored in the NOₓ storage catalysts 15, 15a, 15b, and 17 is calculated. In this embodiment of the present invention, as shown in FIG. 7, each time this total NOₓ amount ΣNOX reaches the allowable value NX, the air-fuel ratio A/F of the exhaust gas flowing into the NOₓ treatment system 13 is temporarily made rich and thereby NOₓ is released from all NOₓ storage catalysts 15, 15a, 15b, and 17.

On the other hand, as explained above, to make the NOₓ storage catalysts 15, 15a, 15b, and 17 release SOₓ, it is necessary to raise the temperature of the NOₓ storage catalysts 15, 15a, 15b, and 17 to the SOₓ release temperature and make the air-fuel ratio of the exhaust gas flowing into the NOₓ storage catalysts 15, 15a, 15b, and 17 rich. Therefore, in this embodiment of the present invention, as shown in FIG. 7, when the total SOₓ amount ΣSOX stored in the NOₓ storage catalysts 15, 15a, 15b, and 17 reaches the allowable value SX, the temperature T of the NOₓ storage catalysts 15, 15a, 15b, and 17 is raised to the NOₓ release temperature TX and the air-fuel ratio of the exhaust gas flowing into the NOₓ storage catalysts 15, 15a, 15b, and 17 is made rich. Note that the SOₓ amount SOXZ exhausted from the engine per unit time is stored as a function of the required torque TQ and engine speed N in the form of a map such as shown by FIG. 8B in advance in the ROM 32. This SOₓ amount SOXZ is cumulatively added to calculate the stored SOₓ amount ΣSOX.

FIG. 9 shows the processing routine for the NOₓ storage catalysts 15, 15a, 15b, and 17.

Referring to FIG. 9, first, at step 60, the exhaust NOₓ amount NOXA per unit time is calculated from the map shown in FIG. 8A. Next, at step 61, this NOXA is added to the NOₓ amount ΣNOX stored in the NOₓ storage catalysts 15, 15a, 15b, and 17. Next, at step 62, it is judged if the stored NOₓ amount ΣNOX is over the allowable value NX. When ΣNOX>NX, the routine proceeds to step 63 where the reducing agent fed from the reducing agent feed valve 18 is used to perform a rich processing, such that the air-fuel ratio of the exhaust gas flowing into the NOₓ treatment system 13 is temporarily switched from lean to rich, and then ΣNOX is cleared.

Next, at step 64, the exhaust SOₓ amount SOXZ per unit time is calculated from the map shown in FIG. 8B. Next, at step 65, this SOXZ is added to the SOₓ amount ΣSOX stored in the NOₓ storage catalyst 15, 15a, 15b, and 17. Next, at step 66, it is judged if the stored SOₓ amount ΣSOX is over the allowable value SX. When ΣSOX>SX, the routine proceeds to step 67 where the air-fuel ratio of the exhaust gas flowing into the NOₓ treatment system 13 is maintained lean while a reducing agent is fed from the reducing agent feed valve 18 to perform a temperature raising control such that the temperature T of the NOₓ storage catalysts 15, 15a, 15b, and 17 is raised to the SOₓ release temperature TX. Next, at step 68, the reducing agent fed from the reducing agent feed valve 18 is used or the air-fuel ratio in each combustion chamber 2 is maintained rich to perform a rich processing such that the air-fuel ratio of the exhaust gas flowing into the NOₓ treatment system 13 is maintained rich, and ΣSOX is clear.

While the invention has been described with reference to specific embodiments chosen for purpose of illustration, it should be apparent that numerous modifications could be made thereto by those skilled in the art without departing from the basic concept and scope of the invention.

### LIST OF REFERENCE SINGS

- 4: intake manifold
- 5: exhaust manifold
- 7: exhaust turbocharger
- 12: catalyst
- 15, 15a, 15b: upstream side NOₓ storage catalyst
- 17: downstream side NOₓ storage catalyst

## Claims

1. An exhaust purification device of an internal combustion engine arranging, inside an engine exhaust passage, an NOₓ storage catalyst storing NOₓ contained in exhaust gas when an air-fuel ratio of an inflowing exhaust gas is lean and releasing stored NOₓ when the air-fuel ratio of the exhaust gas becomes the stoichiometric air-fuel ratio or rich, wherein said NOₓ storage catalyst is comprised of an upstream side NOₓ storage catalyst and a downstream side NOₓ storage catalyst arranged at a downstream side from a downstream end of said upstream side NOₓ storage catalyst across an exhaust passage space and wherein the upstream side NOₓ storage catalyst and the downstream side NOₓ storage catalyst are formed so that a spatial velocity in the downstream side NOₓ storage catalyst becomes larger than a spatial velocity in the upstream side storage catalyst.

2. An exhaust purification device of an internal combustion engine as claimed in claim 1, wherein said upstream side NOₓ storage catalyst is comprised of a plurality of NOₓ storage catalysts arranged in parallel, and said downstream side NOₓ storage catalyst is comprised of at least one NOₓ storage catalyst.

3. An exhaust purification device of an internal combustion engine as claimed in claim 2, wherein said upstream side NOₓ storage catalyst is compared of a pair of NOₓ storage catalysts arranged in parallel, and said downstream side NOₓ storage catalyst is comprised of one NOₓ storage catalyst.

4. An exhaust purification device of an internal combustion engine as claimed in claim 1, wherein said upstream side NOₓ storage catalyst has a total cross-sectional area larger than a total cross-sectional area of said downstream side NOₓ storage catalyst.

5. An exhaust purification device of an internal combustion engine as claimed in claim 1, wherein said upstream side NOₓ storage catalyst has a catalyst surface area per unit volume larger than a catalyst surface area per unit volume of said downstream side NOₓ storage catalyst.

6. An exhaust purification device of an internal combustion engine as claimed in claim 5, wherein said upstream side NOₓ storage catalyst and said downstream side NOₓ storage catalyst respectively have plurality of cells extending in a flow direction of the exhaust gas and wherein the upstream side NOₓ storage catalyst has a number of cells per unit cross-sectional area larger than a number of cells per unit cross-sectional area of the downstream side NOₓ storage catalyst.

7. An exhaust purification device of an internal combustion engine as claimed in claim 1, wherein said upstream side NOₓ storage catalyst and said downstream side NOₓ storage catalyst carry a precious metal catalyst and an NOₓ absorbent and wherein said downstream side NOₓ storage catalyst has a basicity weaker than said upstream side NOₓ storage catalyst.

8. An exhaust purification device of an internal combustion engine as claimed in claim 7, wherein said downstream side NOₓ storage catalyst has an amount of NOₓ absorbent smaller than the amount of NOₓ absorbent of said upstream side NOₓ storage catalyst.

9. An exhaust purification device of an internal combustion engine as claimed in claim 7, wherein as the NOₓ absorbent of said downstream side NOₓ storage catalyst, an ingredient weaker in basicity than the NOₓ absorbent of said upstream side NOₓ storage catalyst is used.

10. An exhaust purification device of an internal combustion engine as claimed in claim 7, wherein as said precious metal catalyst, platinum Pt is used, while as the ingredient forming the NOₓ absorbent, at least one element selected from potassium K, sodium Na, cesium Cs, or other alkali metal, barium Ba, calcium Ca, or other alkali earth, and lanthanum La, yttrium Y, or other rare earth is used.
